# EUROPEAN PATENT APPLICATION

(11) **EP 2 611 050 A1**
(43) Date of publication of application: **03.07.2013**
(21) Application number: 11306807.6
(22) Date of filing: 29.12.2011
(51) Int. Cl.: H04B 13/00

(54) **Method and system for pairing at least two devices**

(71) Applicant: Gemalto SA, 92190 Meudon (FR)
(72) Inventor: Rhelimi, Alain, 13705 LA CIOTAT (FR); Fine, Jean-Yves, 13705 LA CIOTAT (FR)

(57) **Abstract**

The invention relates to a method 20 for pairing at least two devices 16 and 18.

According to the invention, a portable device 14 comprising an over skin communication receiver and at least one radiofrequency transmitter, a first device 16 comprising a first body coupler and at least one first radiofrequency receiver, a second device 18 comprising a second body coupler and at least one second radiofrequency receiver, the second device storing at least data, said second connection data, for connecting, through a third radiofrequency link RF3, the second device, the method comprises the following steps. The first device sends, upon a first physical contact established by an individual's body between the first device and the portable device, through the first body coupler, to the portable device a first connection code 22. If the first connection code includes data relating to an identification of the first device and stored within the portable device, then the portable device sends, through a first radiofrequency link RF1, to the first device data 24 included within the first connection code. The second device sends, upon a second physical contact established by the individual's body between the second device and the portable device, through the second body coupler, to the portable device a second connection code 26. If the second connection code includes data relating to an identification of the second device and stored within the portable device, then the portable device sends, through a second radiofrequency link RF2, to the second device data 28 included within the second connection code. The second device sends to the portable device the second connection data 212. The portable device sends, through the first radiofrequency link, to the first device the second connection data 214. And the first device determines at least connection data, said third connection data, the third connection data depending on at least the second connection data.

The invention also relates to a corresponding system.

## Description

### Field of the invention:

The invention relates, in a general manner, to a method for pairing at least two devices.

Moreover, the invention also pertains to a system for pairing at least two devices.

Within the present description, the expression "for pairing" before the word group "at least two devices" means that one device does know how to establish a communication with at least another device.

The present invention is notably, but not exclusively, applicable to a so-termed "hotspot", as one device to be paired, as a point of access to a communication network, like Internet, with at least one device, like a portable device, such as a mobile terminal.

The portable device comprises a secure element.

Within the present description, a secure element is a smart object that is intended to communicate with the outside world and to protect access to data stored within the object.

### State of the art:

As known per se, a hotspot, as network access point, enables a connection to a communication network over a Radio Frequency (or RF) link. The hotspot provides thus a communication network access to one or more devices that are locally connectable or connected, through an RF link, to the hotspot.

There is a need to provide a solution that allows to pair, in an easy and secure manner, one or several devices with another device, like a contactless or wireless network access point.

### Summary of the invention:

The invention proposes a solution for satisfying the just herein above specified need by providing a method for pairing at least two devices.

According to the invention, a portable device comprises an over skin communication receiver and at least one radiofrequency transmitter. A first device comprises a first body coupler and at least one first radiofrequency receiver. A second device comprises a second body coupler and at least one second radiofrequency receiver. The second device stores at least data, said second connection data, for connecting, through a third radiofrequency link, the second device. The method comprises the following steps. The first device sends, upon a first physical contact established by an individual's body between the first device and the portable device, through the first body coupler, to the portable device a first connection code. If the first connection code includes data relating to an identification of the first device and stored within the portable device, then the portable device sends, through a first radiofrequency link, to the first device data included within the first connection code. The second device sends, upon a second physical contact established by the individual's body between the second device and the portable device, through the second body coupler, to the portable device a second connection code. If the second connection code includes data relating to an identification of the second device and stored within the portable device, then the portable device sends, through a second radiofrequency link, to the second device data included within the second connection code. The second device sends to the portable device the second connection data. The portable device sends, through the first radiofrequency link, to the first device the second connection data. And the first device determines at least connection data, said third connection data, the third connection data depending on at least the second connection data.

The principle of the invention consists in using a portable device (like eGo (registered Trademark)) that pairs successively with a first and a second device while using two different (communication) channels, namely one Over Skin Communication (or OSC) (a.k.a. Body Coupling Communication (or BCC) and Intra Body Communication (or IBC)) channel and one RF channel. Then, the second device transmits, via the portable device, to the first device connection data relating to the second device. Such second connection data enables the first device to deduce third connection data allowing the first device to pair, over an RF communication channel, with the second device.

Two touches or contacts between a user who carries the portable device and the two devices enable to pair locally the portable device with each of the first and second devices. The user contacts with the two devices also allow pairing the two devices with each other in a contact-less or wireless manner.

Thanks to an interposition of the portable device between the two devices, the invention allows one first device to determine information to address the second device. The second device has to previously send its own connection data to the portable device that forwards it to the first device.

It is to be noted that a function allowing a determination of the third connection data, as data for accessing the second device, may be any function using the second connection data.

Accordingly, the use of the third connection (or access) data allows liaising the first device with the second device in a contact-less or wireless manner, i.e. over an RF link. The invention solution allows thus the first device to exchange with the second device by using connection data issued, through the portable device, from the second device.

According to a further aspect, the invention is a system for pairing at least two devices. According to the invention, a portable device comprises an over skin communication receiver and at least one radiofrequency transmitter. A first device comprises a first body coupler and at least one first radiofrequency receiver. A second device comprises a second body coupler and at least one second radiofrequency receiver. The second device comprises means for storing at least data, said second connection data, for connecting, through a third radiofrequency link, the second device. The system comprises at least the first and second devices and the portable device. The first device is adapted to send, upon a first physical contact established by an individual's body between the first device and the portable device, through the first body coupler, to the portable device a first connection code. The portable device is adapted, if the first connection code includes data relating to an identification of the first device and stored within the portable device, to send, through a first radiofrequency link, to the first device data included within the first connection code. The second device is adapted to send, upon a second physical contact established by the individual's body between the second device and the portable device, through the second body coupler, to the portable device a second connection code. The portable device is adapted, if the second connection code includes data relating to an identification of the first device and stored within the portable device, to send, through a second radiofrequency link, to the second device data included within the second connection code. The second device is adapted to send to the portable device the second connection data. The portable device is adapted to send, through the first radiofrequency link, to the first device the second connection data. And the first device is adapted to determine at least connection data, said third connection data, the third connection data depending on at least the second connection data.

As portable device, it comprises at least one microprocessor, as data processing means, at least one memory (or being connected to at least one memory), and comprises or is connect to at least one OSC receiver and at least one RF transmitter, all linked through a control and data bus and/or an Input/Ouput (or I/O) interface(s).

For instance, the portable device may be embodied within a user accessory, like a wristwatch, or may be constituted by a secure element, such as a smart card or a chip to be fixed to a user body preferably in a removable manner. The portable device may be any electronic medium that may have different form factors while having or connecting to an OSC antenna for collecting a differential electromagnetic signal between a user body and the earth ground.

### Brief description of the drawings:

Additional features and advantages of the invention will be more clearly understandable after reading a detailed description of one preferred embodiment of the invention, given as an indicative and non-limitative example, in conjunction with the following drawings:

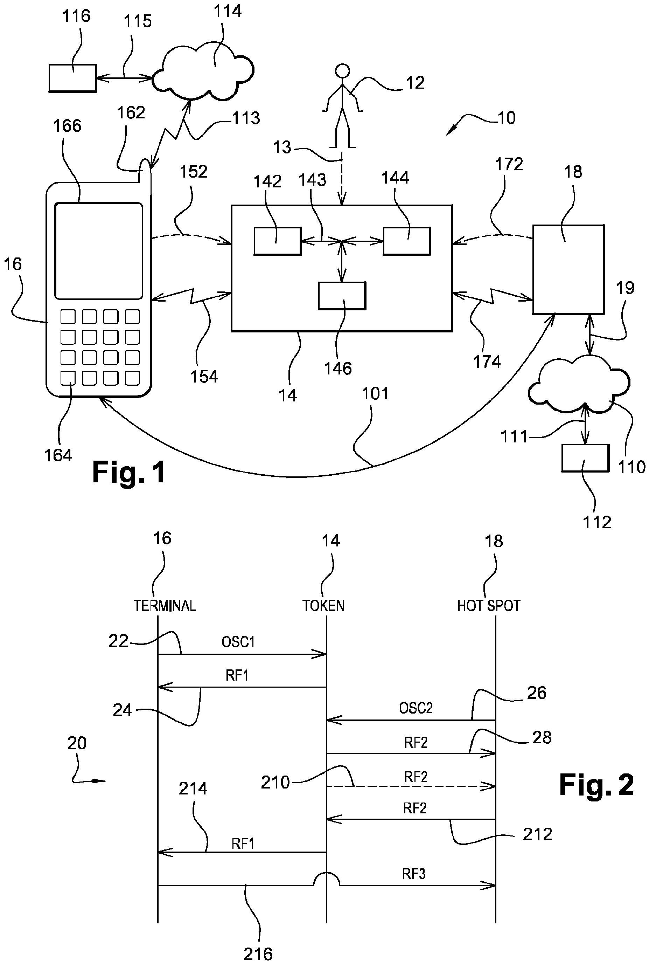

- Figure 1 illustrates a simplified diagram of one embodiment of a system including a mobile (tele)phone, as first device, a portable device and a hotspot, as network access point and second device, the system being arranged so that the second device sends its connection data, through the portable device, to the first device to determine connection data depending on received connection data, according to the invention; and
- Figure 2 represents an example of one message flow between the first device, the portable device and the second device of figure 1, the messages exchanged within the system allows thus to pair the first device with the second device over an RF channel.

### Detailed description:

Herein under is considered a case in which the invention method for pairing at least two devices is implemented by a mobile terminal, a hotspot, as network access point, and a so-termed known eGo type portable device that cooperates with, i.e. is incorporated in or connected to, a wristwatch.

Naturally, the herein below described embodiment is only for exemplifying purposes and is not considered to reduce the scope of the present invention.

For instance, instead of cooperating with a wristwatch, the portable device may cooperate with or be integrated within any other user accessory, like a bracelet, a jewel, or an earpiece.

Likewise, instead of being constituted by a hotspot, the network access point may be a Femtocell, a picocell, a Home (e)Node B, a home base station, a MiFi and/or a gateway.

**Figure 1** shows schematically an individual 12, as user, who carries an ego type device 14, a mobile phone 16, as user terminal and equipment, a hotspot 18 that is connected to a first server 112, as remote entity.

For sake of simplicity, the eGo type device 14, the mobile phone 16, the first server 112 are termed hereinafter the eGo 14, the phone 16, the server 112.

A system 10 for pairing at least the phone 16 with the hotspot 18 includes the eGo 14, the phone 16 and the hotspot 18.

The eGo 14, as portable device, is carried by the user.

The eGo 14 is used notably for communicating locally by using, on the one hand, an OSC channel and, on the other hand, one or several RF channels while applying one or several security measures, like a user identification.

The eGo 14 includes or is connected to an OSC receiver (not represented) and at least one RF transmitter (not represented).

When connected to the eGo 14, the OSC receiver and the RF transmitter(s) may be carried by a host terminal (not represented), like a wristwatch, a mobile telephone or a Personal Digital Assistant (or PDA).

The eGo 14 includes preferably or is connected to at least one RF receiver (not represented). When connected to the eGo 14, the RF receiver(s) may also be carried by a host terminal.

The eGo 14 includes preferably or is connected to a biometric sensor(s) (not represented), such as a fingerprint sensor(s), an iris print sensor(s), a voiceprint sensor(s) and/or a subcutaneous ultrasonic sensor(s). The biometric sensor(s) allow(s) identifying the user, as an authorized user. When the user is identified thanks to a recognition of personal user biometric data that is stored within the eGo 14, the eGo 14 authorizes to send from the eGo 14 data.

The eGo 14 includes preferably a battery (not represented) that provides power to the eGo 14 components. The battery is connected to a charger (not represented) included or not within the eGo 14. The charger is used for charging in power the battery.

The eGo 14 is preferably configured so as to have a low level of power consumption. In a standby state of the eGo 14, only the OSC receiver is preferably active. If the OSC receiver receives data, then at least the main functions (at least data processing means) of the eGo 14 are waked up.

The eGo 14 is preferentially set so as to authorize a device that a user attempts to pair with the eGo 14 only if the eGo 14 authorizes to pair with the requesting device and authorizes the user after having been identified as an authorized user.

The eGo 14 incorporates at least one chip.

The chip includes at least one microprocessor 142, as data processing means, at least one memory 144, and at least two I/O interfaces 146 that are internally all connected, through an internal bidirectional data bus 143, to each other.

The I/O interfaces 146 are connected to the OSC receiver and the RF transmitter(s).

The I/O interfaces 146 are preferably connected to the RF receiver(s).

The I/O interfaces 146 allow communicating, on the one hand, from the internal chip components to the chip exterior, and, on the other hand, from the chip exterior to the internal chip components.

The microprocessor 142 processes, controls and communicates internally data, with all the other components incorporated within the chip and, through the I/O interfaces 146, with the chip exterior.

The microprocessor 142 is able to read data from, write data into, and/or execute data stored within the memory 144.

The microprocessor 142 executes an Operating System (or OS) and at least one application stored within the memory 144. As applications, there is at least one application for pairing the eGo 14 with an external device, and at least one application for allowing two devices that are paired with the eGo 14 to pair with each other. The two devices play, each, a role of terminal successively touched by the user body in reference to EP 1 695 296 B1. More exactly, such a document describes a portable device whose role is played by the eGo 14 and a terminal whose role is played by each of the two devices.

The memory 144 stores data relating to each device with which the eGo 14 is authorized to be paired or paired, such as data relating to the device identity.

The data relating to each device includes a connection code, said first connection code for the first device and said second connection code for the second device of the two devices. Each connection code includes a terminal class identification. The connection code is to be received through the OSC receiver. The connection code includes a first identification number to be sent by the eGo 14, through an RF link, to the device to be paired. The connection code may include a second identification number to be sent by the eGo 14, through an RF link, to the device to be paired.

The eGo 14 is able to recognize or identify a device that is authorized to be paired, as its interlocutor, after a connection code reception over an OSC channel. Then, when its interlocutor is identified, the eGo 14 is configured to send, over an RF channel, data included within the received connection code, to its interlocutor.

The memory 144 may store a public key relating to a device to which the eGo 14 is paired, as data provided by an eGo manufacturer during its personalisation process, the phone 16, the server 112 or another entity.

The memory 144 stores, at least temporarily, data for connecting at least one external entity, as connection data. The connection data may be provided by one or several devices paired with the eGo 14. The connection data may be pre-provisioned during a personalization of the eGo 14 either at its manufacturing or after its delivering, for instance, over an RF channel.

Prior to a pairing with each of the two devices, the memory 144 may store, as fourth connection data, data to be used for connecting a radio communication network(s), like a mobile radio communication network(s). The fourth connection data may include a subscriber identifier(s), like an International Mobile Subscriber Identifier (or IMSI), and a key(s), like ki, allowing to identify and authenticate a subscriber to one or several radio communication network(s). The fourth connection data may be provided by a remote server(s) and/or a local device(s) that is(are) or to be paired with the eGo 14, like a mobile terminal and/or a network access point, and/or an eGo manufacturer during a personalisation at its manufacturing.

The memory 144 stores personal biometric data, as reference biometric data, like one fingerprint(s), one iris print(s), one voiceprint(s) relating to one authorized user.

The memory 144 stores preferably a key(s) to be used for communicating, through an RF link(s), data, in a confidential manner, to a device, like a mobile terminal or a network access point, that may be paired with the eGo 14.

The key(s) may be a symmetric key(s) that is(are) shared (i.e. also stored by another device that may be paired) with a device to be paired with the eGo 14.

The memory 144 may securely store data relating to the eGo 14 itself, like a private key and a corresponding public key. To access the memory 144, an eGo user has to be identified or recognized as an authorized user. Otherwise, i.e. if the user is not an authorized user, the eGo 14 forbids to access the memory 144 and therefore the data stored therein.

The memory 144 stores, preferably in a secure manner, data, such as a particular set of access parameters and/or variables, relating to a device to be paired with the eGo 14, so as to let cooperate two (or more) devices to be each paired with the eGo 14.

The memory 144 stores preferably data relating to a Uniform Resource Identifier (or URI), a Uniform Resource Locator (or URL), and/or an Internet Protocol (or IP) address of a (first) remote server 112 to be addressed. The remote server 112 may be included within an OTI (acronym for "Over The Internet") platform.

According to an important feature of the invention, the eGo 14 is arranged to receive, from at least one, said first or second device, of two devices that are paired with the eGo 14 or during their individual pairing with the eGo 14, connection data and transmit, through an RF link, the received connection data to the other device, said second or first device respectively. The first or second device is thus able to determine, i.e. deduce or compute, connection data based upon the connection data received from the eGo 14 from the second or first device respectively. The first or second device is therefore able to pair with the second or first device respectively while using the determined connection data.

The eGo 14 relays thus the connection data originating from the second or first device and intended to the first or second device respectively. The eGo 14 plays a role of an intermediary between the two devices to be paired with each other, under a user control, through one physical touch of the user with each of the two devices.

The eGo 14 belongs to the individual 12 and is physically in contact 13 with an individual's body. The individual's body is a communication medium between the eGo 14 and another device that is also physically touched, through an electrically conductive element, by the individual's body.

When the user contacts or touches physically at an external device, like a mobile terminal or a hotspot, the eGo 14 is able to launch, through the OSC receiver, a pairing with the device.

As first device, there is, for instance, the phone 16, as user terminal. The first device may also include a set-top box, a desktop computer, a Personal Computer (or PC), a media player, a game console, and/or a portable television set (or TV).

Instead of a mobile phone 16, the user terminal may be any handheld computer, like a Personal Digital Assistant (or PDA), a Voice over Internet Protocol handset, a netbook, and/or a mobile laptop.

As second device, there is, for instance, the hotspot 18, as a point of access to a network.

As to the user terminal, it may be any device including means for processing data (not represented), comprising or being connected to RF communicating means containing at least one antenna for sending to and/or receiving data from outside, comprising or being connected to means for interfacing with a user, as Man Machine Interface (or MMI), like a keyboard, a loudspeaker (not represented) and/or a display screen, and comprising or being connected to means (not represented) for storing data.

The phone RF communicating means may communicate via one or several long range RF link(s) 113 that may be more or less long. The long range radiofrequency(ies) may be fixed at several hundreds of MHz, for instance, around 850, 900, 1800 and/or 1900 MHz, as long range radio-frequency(ies).

The phone RF communicating means communicates via one or several short range RF link(s) 154, 101 that may be more or less short. The short range radiofrequency(ies) may be fixed from around 2,4 GHz to around 10 GHz (for Ultra Wide Band or UWB e.g. IEEE 802.15.4a), at 2,4-2,5 GHz with a range of about 10 m to 100 m (for Zigbee (e.g. IEEE 802.15.4), Wifi and Bluetooth or Bluetooth low energy (e.g. IEEE 802.15.1)) and/or other frequency value(s) allowing to communicate at short range (typically from about 20 cm to 800 m). The short range RF links 154 and 101, as first and third RF link respectively, are bi-directional, i.e. that enable to exchange data in two ways between the phone 16 and an external entity (i.e. an eGo or another device).

The first RF link 154 is at least mono-directional, to connect, from an eGo type device, to the phone 16 while the third RF link 101 is bidirectional to communicate between the phone 16 and an external device, like the hotspot 18.

According to a preferred embodiment, instead of only one and the same short range RF link 101, the third RF link 101 is distinct from the first RF link 154. For instance, the first RF link 154 relates to an NFC type link while the third RF link 101 relates to a Bluetooth or Wifi type link.

The phone 16 comprises preferably a wireless antenna 162, a keyboard 164 and a display screen 166.

Alternatively, instead of a separate keyboard, the display screen integrates a touch sensitive keyboard.

The phone 16 may be connected, over a mobile radio-communication or wireless link 113, through a mobile radio-communication network 114, to a second remote server 116. The second remote server 116 is connected, through a wire or wireless link 115, to the mobile radio-communication network 114. The second remote server 116 is included within an OTA (acronym for "Over The Air") platform.

The phone 16 includes preferably at least one microprocessor (not represented), as data processing means, at least one memory (not represented) and several I/O interfaces.

The phone 16 includes or is connected to a transceiver (not represented) which is placed at an immediate vicinity of the individual 12, at a location where the individual may have physical contact with the transceiver, e.g. by touching or quasi touching a metallic element (as OSC antenna). The transceiver is thus accessible at least to the phone 16 microprocessor. The transceiver is able to communicate, through an OSC transmitter and an RF receiver, with the eGo 14. The OSC transmitter is described notably in relation with the figure 4 of EP 1 695 296 B1 which is incorporated herein by reference. The RF receiver is also described notably in relation with the figure 1 of EP 1 695 296 B1 which is incorporated herein by reference.

The OSC transmitter of the phone 16 includes a first body coupler (or antenna) (not represented) that allows communicating through a body mass of the individual 12.

The phone OSC transmitter is able to communicate, over a mono-directional first OSC link 152, with the OSC receiver of the eGo 14.

The RF receiver of the phone 16 is able to exchange, over the first RF link 154, with the RF transmitter of the eGo 14.

Such a first RF link 154 is preferably bi-directional. In other words, the transceiver is also able to communicate, through an RF transmitter, with an RF receiver of the eGo 14.

The phone memory stores data.

Alternately, instead of the phone memory, a memory of a secure element (not represented) that is coupled to the phone 16 is used for storing data.

As data, it contains:
- a connection code, said first connection code, allowing to pair with the eGo 14, and
- at least one application.

The first connection code is described notably in relation with the figure 1 of EP 1 695 296 B1 which is incorporated herein by reference. The first connection code may include one or several parameters (e.g. an International Mobile Equipment Identity (or IMEI), a phone serial number, a phone number, an Application Family Identifier (or AFI) and/or the like, as phone identifier(s) and terminal class identification.

The phone memory may also store connection data, said first connection data, allowing to pair with the phone 16, as first device.

The phone memory may also store user data, like a User IDentifier (or UID) and/or a user password, as first credentials, that allow identifying and authenticating a user of the phone 16 to a server 112 to be addressed through the hotspot 18. The first credentials may be included within the first connection data.

If there is information that is not stored within the phone 16 and/or the eGo 14 and requested by the server 112, then a target application allows requesting, through the phone 16 MMI, lacking information, like transaction data.

As transaction data, it may be, among others, an amount of a transaction to be debited from a user banking account number.

As application(s) supported by the phone 16, there may be a Web browser, an automatic access to a user mail server and/or other application(s), so as to access with or without a user control, through the hotspot 18, the server 112.

As application(s) supported by the phone 16, there may be a target application allowing the phone 16 firstly to pair with the eGo 14 while exchanging data with the eGo 14 and then to receive from and/or send data to the eGo 14.

As application(s) supported by the phone 16, there may be a target application allowing the phone 16, after its pairing with the eGo 14 and a reception of connection data from the eGo 14, to pair with an external device, like the hotspot 18.

As application(s) supported by the phone 16, there may be a target application allowing the phone 16 to transmit, over the first OSC link 152 or the first RF link 154, to the eGo 14 the first connection data, to pair with an external device, like the hotspot 18.

Alternately, the phone 16 is configured so as to allow an automatic pairing with the eGO 14 or, thanks to eGo 14, with another device, like the hotspot 18, paired or to be paired with the eGo 14.

The phone 16 is adapted to determine at least connection data, said third connection data. The phone 16 needs to use the third connection data to connect, from the phone 16, through a bidirectional radiofrequency link 101, at least one second device, like the hotspot 18.

The third connection data depends on at least the second connection data to be received, over the first RF link 154, through the eGo 14, from a second device, like the hotspot 18. The third connection data is a function of at least the second connection data. Such a function may be an identity function, i.e. the third connection data is the second connection data.

According to another embodiment, the third connection data depends on the first connection data originating from the phone 16 and the second connection data originating, through the eGo 14 (once paired or during its pairing), from a second device, like the hotspot 18. The phone 16 and the external device share one and the same function allowing to determine the third connection data.

According to still another embodiment, the third connection data depends on the first connection data originating from the phone 16, the second connection data originating, through the eGo 14 (once paired or during its pairing), from a second device, and the fourth connection data originating from the eGo 14 (once paired or during its pairing). The phone 16 and the external device share one and the same function allowing to determine the third connection data.

The third connection data may include an identifier of a second device to be paired with the phone 16.

The third connection data may include a time slot value which the phone 16 has to use for communicating with a second device to be paired with the phone 16.

The third connection data may include an RF value which the phone 16 has to use for communicating with a second device to be paired with the phone 16.

The third connection data may include a key(s), termed a session key(s), to be used for communicating data, in a confidential manner, with the hotspot 18. The session key(s) may include an integrity key used for verifying that data has not been modified and/or a confidentiality key used for encrypting data to be exchanged between the phone 16 and the hotspot 18.

The phone microprocessor processes data originating from the phone memory and, through the phone I/O interfaces, an external entity(ies), like the eGo 14 and/or the hotspot 18.

The phone microprocessor executes preferably the Web browser, as user interface, so as to interact with the target applications, like first target application(s) supported by the phone 16, an application(s), as second target application(s) supported by the eGo 14, and an application(s), as third target application supported by the hotspot 18.

The phone microprocessor executes preferably a security function(s), in order to protect the confidentiality of data (e.g user information) managed through or by the phone 16.

The security functions may include an encryption/decryption process to be used before sending to/ after receiving from the eGo 14 data, so as to protect access to data thus exchanged between the phone 16 and the eGo 14, between the phone 16 and the second server 116 and/or between the hotspot 18 and the phone 16.

The phone 16, as mobile handset, may play, once paired with the hotspot 18, as second device, a role of a wireless (or contact-less) modem, so as to enable the hotspot 18 to exchange data, through the phone 16, with the second remote server 116.

The phone 16, once paired with the hotspot 18, may be an intermediary communication element relaying information between either the hotspot 18 and the second server 116 or, through the hotspot 18, the second server 116 and the first server 112.

As to the network access point, like the hotspot 18, it may be any device including means for processing data (not represented), comprising or being connected to RF communicating means containing at least one antenna for sending to and/or receiving data from outside, comprising means (not represented) for storing data, and comprising means for communicating a communication network, like Internet.

The hotspot RF communicating means communicates via one or several short range RF link(s) 174, 101 that may be more or less short. The short range radiofrequency(ies) may be fixed from around 2,4 GHz to around 10 GHz (for UWB e.g. IEEE 802.15.4a), at 2,4-2,5 GHz with a range of about 10 m to 100 m (for Zigbee (e.g. IEEE 802.15.4), Wifi and Bluetooth or Bluetooth low energy (IEEE 802.15.1)) and/or other frequency value(s) allowing to communicate at short range (typically from about 20 cm to 800 m). The short range RF links 174 and 101, as second and third RF link respectively, are bi-directional, i.e. that enable to exchange data in two ways between the hotspot 18 and an external entity.

The second RF link 174 is at least mono-directional to connect, from an eGo type device, to the hotspot 18 while the third RF link 101 is bidirectional to communicate between the hotspot 18 and an external device, like the phone 16.

According to a preferred embodiment, instead of only one and the same short range RF link 101, the third RF link 101 is distinct from the second RF link 174. For instance, the second RF link 174 relates to an NFC type link while the third RF link relates to a Bluetooth or Wifi type link.

The hotspot 18 includes preferably at least one microprocessor (not represented), as data processing means, at least one memory (not represented) and several I/O interfaces.

The hotspot 18 includes or is connected to a transceiver (not represented) which is placed at an immediate vicinity of the individual 12, at a location where the individual may have physical contact with the transceiver, e.g. by touching or quasi touching a metallic element (as an OSC antenna). The transceiver is thus accessible at least to the hotspot 18 microprocessor. The transceiver is able to communicate, through an OSC transmitter and an RF receiver, with the eGo 14. The OSC transmitter is described notably in relation with the figure 4 of EP 1 695 296 B1 which is incorporated herein by reference. The RF receiver is also described notably in relation with the figure 1 of EP 1 695 296 B1 which is incorporated herein by reference.

The OSC transmitter of the hotspot 18 includes a second body coupler (not represented) that allows communicating through a body mass of the individual 12.

The hotspot OSC transmitter is able to communicate, over a mono-directional second OSC link 172, with the OSC receiver of the eGo 14.

The RF receiver of the hotspot 18 is able to exchange, over the second RF link 174, with the RF transmitter of the eGo 14.

Such a second RF link 174 is preferably bi-directional. The transceiver is therefore also able to communicate, through an RF transmitter, with an RF receiver of the eGo 14.

The hotspot 18 is connected, through a bidirectional link 19, like a wire or wireless line, to the communication network 110, so as to exchange information with the communication network 110. The communication network 110, like Internet or Intranet, is connected, over a wire or wireless link 111, to a (first) server 112.

The hotspot memory stores data.

Alternately, instead of the hotspot memory, a memory of a secure element (not represented) that is coupled to the hotspot 18 is used for storing data.

As data, it contains:
- a connection code, said second connection code, allowing to pair with the eGo 14, and
- at least one application.

The second connection code is described notably in relation with the figure 1 of EP 1 695 296 B1 which is incorporated herein by reference. The second connection code may include a hotspot serial number, and/or the like, as terminal class identification.

The hotspot memory may also store connection data, said second connection data, allowing to pair with the hotspot 18, as second device. The second connection includes an address identifier, like a Media Access Control (or MAC) address for Bluetooth or Service Set IDentification (or SSID) for Wifi, and a key, like a Bluetooth key for Bluetooth or a Wireless Equivalent Privacy (or WEP) key for Wifi.

The hotspot memory stores preferably user data, like a UID and/or a user password, as second credentials, that allow identifying and authenticating a user of the hotspot 18 to the server 112 to be addressed.

The hotspot memory may also store user data, like a UID and/or a user password, as third credentials, that allow identifying and authenticating a user of the hotspot 18 to a second remote server 116 to be addressed through the phone 16.

The second and/or third credentials may be included within the second connection data.

As application(s) supported by the hotspot 18, there may be a fourth target application allowing the hotspot 18 firstly to pair with the eGo 14 while exchanging data with the eGo 14 and, secondly, to receive from and/or send data to the eGo 14.

As application(s) supported by the hotspot 18, there may be a fifth target application allowing the hotspot 18, after its pairing with the eGo 14 and a transmission of the second connection data to the eGo 14, to pair with an external device, like the phone 16.

As application(s) supported by the hotspot 18, there may be a target application allowing the hotspot 18 to receive connection data from the eGo 14, to pair with an external device, like the phone 16. The connection data includes the first connection data originating from the phone 16 and/or the fourth connection data originating from the eGo 14.

Alternately, the hotspot 18 is configured so as to allow an automatic pairing with the eGO 14 or, thanks to eGo 14, with another device, like the phone 16, paired or to be paired with the eGo 14.

The hotspot 18 may be adapted to determine at least connection data, said third connection data.

The hotspot 18 needs to use the third connection data to connect, from the hotspot 18, through the third RF link 101, at least one first device, like the phone 16.

The third connection data may depend on at least the first connection data to be received, over the second RF link 174, through the eGo 14, from a first device, like the phone 16. The third connection data is a function of at least the first connection data. Such a function may be an identity function, i.e. the third connection data is the first connection data.

According to another embodiment, the third connection data depends on the second connection data originating from the hotspot 18 and the first connection data originating, through the eGo 14 (once paired or during its pairing), from a first device, like the phone 16. The hotspot 18 and the external device share one and the same function allowing to determine the third connection data.

According to still another embodiment, the third connection data depends on the second connection data originating from the hotspot 18, the first connection data originating, through the eGo 14 (once paired or during its pairing), from a first device, and the fourth connection data originating from the eGo 14 (once paired or during its pairing). The hotspot 18 and the external device share one and the same function allowing to determine the third connection data.

The third connection data may include an identifier of a first device to be paired with the hotspot 18.

The third connection data may include a time slot value which the hotspot 18 has to use for communicating with a second device to be paired with the hotspot 18.

The third connection data may include a RF value which the hotspot 18 has to use for communicating with a second device to be paired with the hotspot 18.

The third connection data may include a key(s), termed a session key(s), to be used for communicating data, in a confidential manner, with the phone 16. The session key(s) may include an integrity key used for verifying that data has not been modified and/or a confidentiality key used for encrypting data to be exchanged between the phone 16 and the hotspot 18.

The hotspot microprocessor processes data originating from the hotspot memory and, through the hotspot I/O interfaces, an external entity(ies), like the eGo 14 and/or the phone 16.

The hotspot microprocessor executes the target applications supported by the hotspot 18.

The hotspot microprocessor executes preferably a security function(s), in order to protect access to user information managed through or by the hotspot 18.

The security functions may include an encryption/decryption process to be used before sending to/ after receiving from the eGo 14 data, so as to protect access to data thus exchanged between the hotspot 18 and the eGo 14, between the hotspot 18 and the first server 112 and/or between the hotspot 18 and the phone 16.

The hotspot 18 plays a role of a wireless (or contact-less) modem, so as to exchange data between a first device, like the phone 16, and the first server 112.

The hotspot 18 may be located within a home of an individual or premises of an enterprise. The hotspot 18 can be portable and therefore movable.

The hotspot 18 memory may store a private key and a corresponding public key.

The hotspot 18, once paired with the phone 16, may consist of an intermediary communication element relaying information between either the phone 16 and the first server 112 or, through the phone 16, the second server 116 and the first server 112.

Figure 2 depicts, according to one particular embodiment, notably messages 20 that are exchanged between the phone 16, as user terminal, the eGo 14, and the hotspot 18, as network access point.

As soon as the user who carries the eGo 14 touches physically the phone 16 (which is an eGo technology compliant device), the phone 16 launches an execution of a first target application supported by the phone 16, so as to pair the phone 16 with the eGo 14. Alternately, the phone user selects, through the phone MMI, the first target application to run it and pair the phone 16 with the eGo 14.

The EP 1 695 296 B1 is incorporated herein by reference as to the description of figure 2, so as to further detail the functions carried out by the eGo 14, as portable device which pairs consecutively with the phone 16 and the hotspot 18, as terminal.

Upon a first physical contact established by an individual's body between the phone 16, as first device, and the eGo 14, as portable device, the phone 16 sends, through the first body coupler, to the eGo 14 a first connection code 22.

The phone 16 and the eGo 14 use thus firstly a first OSC channel OSC1 over a mono-directional first OSC link 152.

Optionally, the phone 16 sends, through the first body coupler and the first OSC channel OSC1, to the eGo 14 the first connection data stored within the phone 16.

Preferentially, to improve a security, the eGo 14 carries out a user biometric identification step that allows to ensure that the user who carries the eGo 14 is the authorized user. If, further to a capture of biometric data of the user to be compared with the reference biometric data, the eGo 14 recognizes the user, then the eGo 14 authorizes to go on. Otherwise, i.e. if the captured biometric data does not match the reference biometric data, the eGo 14 forbids to go on.

The eGo 14 carries out, preferably at first, the user biometric identification step, i.e. prior to receiving a first connection code from the phone 16 through the first body coupler.

Alternatively, the eGo 14 carries out the user biometric identification step prior to a sending of any data stored within the eGo memory.

Then, thanks to the received first connection code, the eGo 14 verifies whether the phone 16 is registered within the eGo 14. If the first connection code includes data relating to an identification of the phone 16, which data is stored within the eGo 14, then the eGo 14 sends, preferably through a first RF link RF1, to the phone 16 data 24 included within the first connection code.

The phone 16 and the eGo 14 are thus paired.

Optionally, the phone 16 sends, through the first RF link RF1, to the eGo 14 the first connection data stored within the phone 16.

As soon as the user who carries the eGo 14 touches physically the hotspot 18 (which is also an eGo technology compliant device), the hotspot 18 launches an execution of a third target application supported by the hotspot 18, so as to pair the hotspot 18 with the eGo 14.

Upon a second physical contact established by an individual's body between the hotspot 18, as second device, and the eGo 14, as portable device, the hotspot 18 sends, through the second body coupler, to the eGo 14 a second connection code 26.

The hotspot 18 and the eGo 14 use thus firstly a second OSC channel OSC2 over a mono-directional second OSC link 172.

Then, thanks to the received second connection code, the eGo 14 verifies whether the hotspot 18 is registered within the eGo 14. If the second connection code includes data relating to an identification of the hotspot 18, which data is stored within the eGo 14, then the eGo 14 sends, preferably through a second RF link RF2, to the hotspot 18 data 28 included within the second connection code.

The hotspot 18 and the eGo 14 are thus paired.

Optionally, the eGo 14 sends, through the second RF link RF2, to the hotspot 18 the first connection data that is stored within the eGo memory and originates from the phone 16. The hotspot 18 stores the received first connection data. The hotspot 18 may determine, thanks to the first connection data, third connection data to be used by an external device, like the phone 16, so as to pair with this latter. The hotspot 18 determines third connection data depending on at least the first connection data and the second connection data. Thanks to the third connection data, the hotspot 18 sends, through a third RF link RF3, to the first device data (not represented).

Optionally, the eGo 14 sends, within a message including the data 28 included within the second connection code or a separated message, through the second RF link RF2, to the hotspot 18 the fourth connection data 210 that is stored within the eGo memory. The hotspot 18 stores the received fourth connection data. The hotspot 18 may determine, thanks to the fourth connection data, third connection data to be used by an external device, like the phone 16, so as to pair with this latter. The hotspot 18 determines third connection data depending on at least the fourth connection data and the second connection data. Thanks to the third connection data, the hotspot 18 sends, through a third RF link RF3, to the first device data (not represented).

Optionally, the eGo 14 sends, through the second RF link RF2, to the hotspot 18 the first connection data originating from the phone 16 and the fourth connection data originating from the eGo 14. The hotspot 18 stores the received first and fourth connection data. The hotspot 18 may determine, thanks to the first and fourth connection data, third connection data to be used by an external device, like the phone 16, so as to pair with this latter. The hotspot 18 determines third connection data depending on at least the first connection data, the fourth connection data and the second connection data. Thanks to the third connection data, the hotspot 18 sends, through a third RF link RF3, to the first device data (not represented).

The hotspot 18 sends, preferably through the second RF link RF2, to the eGo 14 the second connection data 212.

Alternately, instead of using the second RF link RF2, upon a third physical contact established by an individual's body between the hotspot 18 and the eGo 14, the hotspot 18 sends, through the second body coupler, through the second OSC link OSC2, to the eGo 14 the second connection data.

Once the eGo 14 has received and stored the second connection data, the eGo 14 sends, through the first RF link RF1, to the phone 16, the second connection data 214.

Besides the second connection data, the eGo 14 may send, through the first RF link RF1, to the phone 16, additional data, like a first remote server 112 address and/or user credentials to access, in a secure manner, the server 112.

Optionally, the eGo 14 sends, through the first RF link RF1, to the phone 16, the fourth connection data 210 that is stored within the eGo memory. The phone 16 stores the received fourth connection data. The phone 16 may determine, thanks to the fourth connection data, third connection data to be used by an external device, like the hotspot 18, so as to pair with this latter. The phone 16 and the hotspot 18 share one and the same function for determining third connection data to be used for pairing with each other. The phone 16 determines third connection data depending on at least the fourth connection data and the second connection data.

Optionally, if the phone 16 has sent the first connection data and is to be used for determining the third connection data, the phone 16 determines third connection data depending on at least the first connection data and the second connection data received from the eGo 14.

Optionally, if the phone 16 has sent the first connection data and received fourth connection data from the eGo 14 and are both to be used for determining the third connection data, the phone 16 determines third connection data depending on at least the first connection data, the fourth connection data and the second connection data received from the eGo 14.

The phone 16 determines at least third connection data depending on at least the second connection data received from the eGo 14 .

Then, thanks to the determined third connection data, the phone 16 sends, through a third RF link RF3, like a Bluetooth or Wifi link, to the hotspot 18 data 216.

The phone 16 and the hotspot 18 are thus also paired.

The phone 16 is coupled to the hotspot 18.

If the third connection data does not include a shared key, then the phone 16 and the hotspot 18 may generate a (secret) shared key based upon at least the third connection data and a predetermined shared algorithm. The shared key is used, for example, as a (communication) session key. The phone 16 and the hotspot 18 establish thus a secure channel between them. The secure channel consists in using a session key(s), shared between the phone 16 and the hotspot 18, so as to exchange information in a secure manner. The hotspot 18 preferably authenticates, thanks to the third connection data, the phone 16. Likewise, the phone 16 may also authenticate, thanks to the third connection data, the hotspot 18. One of the phone 16 and the hotspot 18 encrypts data to be sent while using the session key and the other of the phone 16 and the hotspot 18 decrypts received data while using the session key.

A communication session between the phone 16 and the hotspot 18 may be open from either the phone 16 or the hotspot 18.

For example, the phone 16 opens a private and secure contactless or wireless communication (while using the third RF link RF3) to the hotspot 18 to connect to the remote server 112, as interlocutor of the phone 16. The remote server 112 may be identified thanks to the address received from the eGo 14. The remote server 112 preferably authenticates the phone 16 user, thanks to the user credentials that is supplied by the phone 16 and received from the eGo 14.

Thus, further to two physical touches between an individual carrying an eGo 14 and two devices, like the phone 16 and the hotspot 18, an easy pairing between the two devices is carried out. Such an easy pairing allows connecting, through an RF link, friendly, intuitively, quickly and preferably securely all devices under a user control. Only the user able to touch physically the devices to be thus paired is allowed to connect them.

Such an invention may be used for accessing, among others, a hotel service (e.g. hotel), a private meeting (e.g. a meeting room), a Personal Area Network (e.g. a user home).

The embodiment that has just been described is not intended to limit the scope of the concerned invention. Other embodiments may be given. As another embodiment example, after a pairing between the phone 16 and the eGo 14 after which or during which the phone 16 sends to the eGo 14 first connection data, instead of sending the second connection data, the hotspot 18 receives, from the eGo 14, just after its own pairing or during its own pairing with the eGo 14, the first connection data. The received first connection data allows the hotspot 18 to determine third connection data to be used for pairing with the phone 16. Once the hotspot 18 has determined such third connection data based upon the first connection data, the hotspot 18 transmits directly, through a third RF link, to the phone 16 data.

## Claims

1. A method (20) for pairing at least two devices (16 and 18), **characterized in that**, a portable device (14) comprising an over skin communication receiver and at least one radiofrequency transmitter, a first device (16) comprising a first body coupler and at least one first radiofrequency receiver, a second device (18) comprising a second body coupler and at least one second radiofrequency receiver, the second device storing at least data, said second connection data, for connecting, through a third radiofrequency link (RF3), the second device, the method comprises the following steps:
- the first device sends, upon a first physical contact established by an individual's body between the first device and the portable device, through the first body coupler, to the portable device a first connection code (22);
- if the first connection code includes data relating to an identification of the first device and stored within the portable device, then the portable device sends, through a first radiofrequency link (RF1), to the first device data (24) included within the first connection code;
- the second device sends, upon a second physical contact established by the individual's body between the second device and the portable device, through the second body coupler, to the portable device a second connection code (26);
- if the second connection code includes data relating to an identification of the second device and stored within the portable device, then the portable device sends, through a second radiofrequency link (RF2), to the second device data (28) included within the second connection code;
- the second device sends to the portable device the second connection data (212);
- the portable device sends, through the first radiofrequency link, to the first device the second connection data (214); and
- the first device determines at least connection data, said third connection data, the third connection data depending on at least the second connection data.

2. Method according to claim 1, wherein the second device sends, through the second radiofrequency link (RF2), to the portable device the second connection data.

3. Method according to claim 1 or 2, wherein, thanks to the third connection data, the first device sends, through a third radiofrequency link (RF3), to the second device data (216).

4. Method according to any of claims 1 to 3, wherein, the portable device storing connection data, said fourth connection data, the portable device sends to the first device and the second device the fourth connection data (210).

5. Method according to claim 4, wherein the first device and the second device determine, each, third connection data depending on at least the fourth connection data and the second connection data.

6. Method according to claim 5, wherein
- thanks to the third connection data, the first device sends, through a third radiofrequency link, to the second device data; and/or
- thanks to the third connection data, the second device sends, through a third radiofrequency link, to the first device data.

7. Method according to any of claims 1 to 6, wherein the method further includes a user identification step, and, based upon a result of the user identification step, the portable device authorizes or forbids to send from the portable device data.

8. Method according to any of claims 1 to 7, wherein the first device and/or the second device is connected to at least one communication network (110 and/or 114).

9. Method according to any of claims 1 to 8, wherein the portable device is connected to a host terminal, the host terminal comprising means for communicating data through at least one radiofrequency link.

10. A system (10) for pairing at least two devices (16 and 18),
**characterized in that**, a portable device (14) comprising an over skin communication receiver and at least one radiofrequency transmitter, a first device (16) comprising a first body coupler and at least one first radiofrequency receiver, a second device (18) comprising a second body coupler and at least one second radiofrequency receiver, the second device comprising means for storing at least data, said second connection data, for connecting, through a third radiofrequency link (RF3), the second device, the system comprises at least the first and second devices and the portable device,
**in that** the first device is adapted to send, upon a first physical contact established by an individual's body between the first device and the portable device, through the first body coupler, to the portable device a first connection code (22);
**in that** the portable device is adapted, if the first connection code includes data relating to an identification of the first device and stored within the portable device, to send, through a first radiofrequency link (RF1), to the first device data (24) included within the first connection code;
**in that** the second device is adapted to send, upon a second physical contact established by the individual's body between the second device and the portable device, through the second body coupler, to the portable device a second connection code (26);
**in that** the portable device is adapted, if the second connection code includes data relating to an identification of the first device and stored within the portable device, to send, through a second radiofrequency link (RF2), to the second device data (28) included within the second connection code;
**in that** the second device is adapted to send to the portable device the second connection data (212);
**in that** the portable device is adapted to send, through the first radiofrequency link, to the first device the second connection data (214); and
**in that** the first device is adapted to determine at least connection data, said third connection data, the third connection data depending on at least the second connection data.
